# EUROPEAN PATENT SPECIFICATION

(11) **EP 0 544 718 B1**
(45) Date of publication and mention of the grant of the patent: **19.07.1995**
(21) Application number: 91914460.0
(22) Date of filing: 16.08.1991
(51) Int. Cl.: A47C 5/12, B29C 49/20

(54) **METHOD FOR MANUFACTURING A SEAT AND SEAT MANUFACTURED ACCORDING TO THE METHOD.**
VERFAHREN ZUR HERSTELLUNG EINES SITZES UND SITZ HERGESTELLT NACH DEM VERFAHREN.
PROCEDE DE FABRICATION D'UN SIEGE ET SIEGE FABRIQUE SELON LE PROCEDE.

(30) Priority: 17.08.1990 BR 9004086
(43) Date of publication of application: 09.06.1993
(73) Proprietor: MERCEDES-BENZ DO BRASIL S.A., 09700-Sao Bernardo do Campo, SP (BR)
(72) Inventor: GONZALES FERNANDEZ, José, Brooklin Sao Paulo (BR)
(74) Representative: Bardo, Julian Eason
(86) International application number: BR9100016
(87) International publication number: WO9203074

(56) References cited:
- DE-U- 8 628 464
- FR-A- 2 375 976
- US-A- 3 140 329
- US-A- 3 669 496
- US-A- 4 608 744

## Description

The present invention refers to a method of manufacturing a seat, that is to say, seats in general and particularly seats suitable for use in automative vehicles such as buses and coaches. The invention does, however, apply to other types of seats, such as those intended for domestic use and the like. The invention refers also to the seat manufacturated according to this method.

Many types of seats are known. They are made with many different types of structures and manufactured using many different types of materials, normally being developed with a view to greater practicality, low cost and acceptable mechanical strength allied with the lowest possible weight.

Document US-A 3669496 refers to a seat formed by a one-piece plastic blow-moulded part that forms a seat bottom portion and a seat back portion, recesses being formed on the back side of the bottom portion and back portion. A reinforcement frame consisting of steel tubes or the like is positioned over the recesses on the back side of the seat, where said frame is secured by means of screws. Although this type of seat is very practical, it has the disadvantage that it needs a complex connection between the seat part and the reinforcement frame, beside additional securing elements, such as screws, that cooperate in nuts moulded in the back side of the seat.

In order to avoid these above disadvantages, the present invention provides a new method for manufacturing a seat that comprises placing a reinforcement frame in a mould and then blow moulding within the mould a one piece plastic part defining a seat bottom portion and a seat back portion, thereby producing a seat in which the frame is at least partially embedded in a peripheral edge of the plastic part.

This method has been developed exclusively for the use of blow moulding techniques which are relatively recent in the plastic transformation field.

In a preferred embodiment, the reinforcement frame is maintained in position in the mould by magnetic attraction produced by magnets associated with the mould.

The use of such a method of manufacture in which the plastic part surrounds almost completely the cross section of the frame, eliminates the problem of cracking or splitting of the plastic part in view of the fact that there are no stress concentrations.

The present invention also refers to a seat manufactured according to the method above described. Its includes a one piece moulded plastic part defining a seat bottom portion and a seat back portion, said plastic part being formed by blow moulding and including a reinforcement frame with tubular peripheral structure received in formations shaped as reentrances or claws, in which said reentrances or claws are moulded along a peripheral edge of said plastic part and further in that said reentrances or claws surround approximately three quarters of the cross section of the tubular structure of said reinforcement frame.

The fixing of the frame to the plastic part is preferably effected during moulding and the reentrances or claws are moulded directly over the frame so as to provide a clamping of the tubular frame into the reentrances or claws without using fixing elements, such as screws or the like.

The peripheral edge of the plastic part may have cut-away areas so as to leave parts of the frame exposed which serve as hand grips for the passenger of a vehicle in which the seat is mounted.

The invention will be better understood by the following description given by way of example and made with reference to the accompanying drawings, in which:
Figure 1 is a side elevation of a seat in accordance with the present invention;
Figure 2 is a front elevation of the same seat;
Figure 3 is a double seat that may be manufactured in accordance with the invention;
Figure 4 is a detail of the seat with the plastic part and the frame, the plastic part being cut away longitudinally to show the fitment between its edge and the frame;
Figure 5 is a sectional detail of part of the edge of the seat, showing the connection between the plastic part and the frame;
Figure 6 is a schematic showing of a mould suitable for moulding the plastic part directly onto the frame.

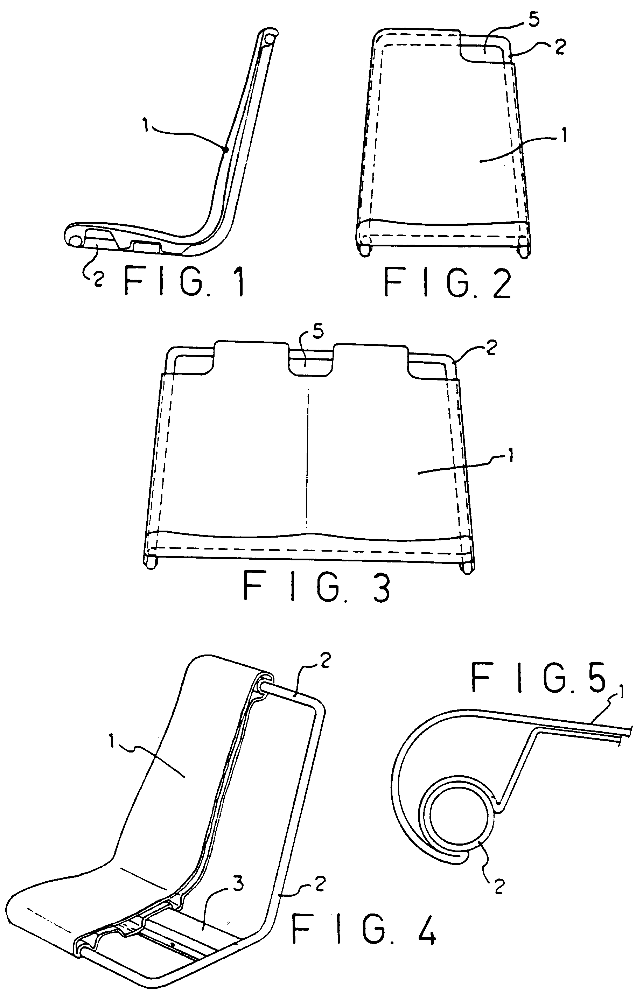

As can be seen from Figure 1, the seat is basically comprised of a one piece blow moulded plastic part 1 having a seat bottom portion and a seat back portion, the peripheral edge of such part receiving therein a metallic reinforcement frame 2.

A connecting part 3, shown in more detail in Figure 4, joins two parallel horizontal sections of that part of the frame that corresponds to the seat bottom portion of the seat. Connecting part 3 serves for mounting the seat on feet or other base structure (not shown).

Plastic part 1 is moulded as a single part and has a peripheral edge provided with formations in the form of reentrances or claws which receive and at least partially surround, for example about three quarters of the cross section of the tube that forms the peripheral structure of the frame 2. Figure 5 shows a detail of the preferred fitment between frame 2 and plastic part 1, showing how the tubular peripheral member of the frame is tightly received in a correspondingly shaped longitudinal cavity or reentrance in the edge of the plastic part.

Figure 2 shows how the plastic part 1 may have one or more cut-away areas 5 so as to expose a section of the tube of the frame and thus to define a hand grip.

Figure 3 shows a one piece moulding of a double seat. Naturally, longer bench type seats with any suitable number of seating places may be produced.

The seat side of plastic part 1 is anatomically shaped to ensure the comfort of the user.

It should be noted that in general the frame 2 may be made from any suitably rigid and strong material to provide the support and reinforcement necessary but that a metallic frame would normally be preferred. In particular, when the seat is manufactured by the preferred process of this invention, it should be made of a magnetic material as will be understood from the following description of the method.

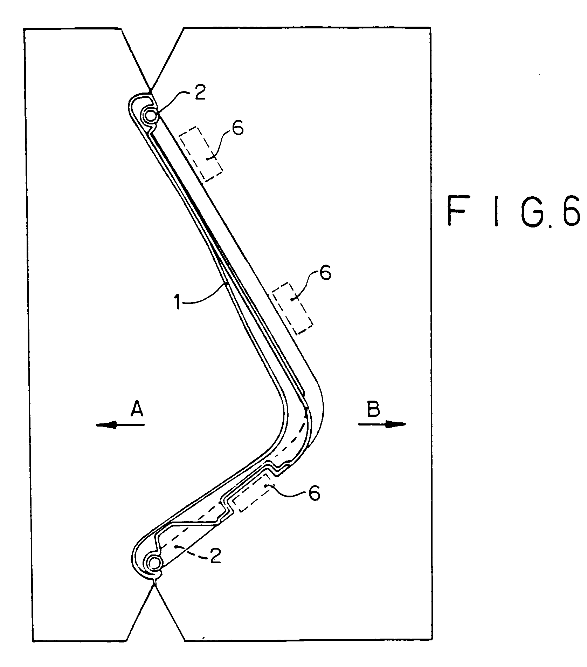

Figure 6 is a schematic showing of a blow mould for producing the seat of the present invention. The mould comprises two mould halves A and B, no further description of the conventional features of the mould being given since they are nor relevant to the present invention. In order to produce the seat, the previously manufactured reinforcement frame 2 is placed within part B of the mould and maintained in position due to the magnetic attraction produced by a series of magnets 6 (also shown schematically) accociated with mould half B. The plastic blow moulding parison is then introduced into the mould which is then closed and blow moulding is carried out. The resulting product is thus obtained with the plastic part 1 of the seat moulded directly over the frame 2 in a single operation, ensuring that the frame is effectively embedded in the moulded plastic part 1 with fitments as shown in Figures 4 and 5.

Finally, it will be appreciated that, although the above method is highly preferred, the plastic portion could be moulded separately with its specially formed peripheral edge and only after that the frame could be force fitted into the reentrances formed therein. Equally, the specific shape of the reentrances or claws is not limited to that shown in Figures 4 and 5, it being clear that other sectional shapes would be suitable provided that there are negative surfaces that prevent the separation of the plastic part from the frame during use.

## Claims

1. Method for manufacturing a seat, characterised by placing a reinforcement frame in a mould and then blow moulding within the mould a one piece plastic part defining a seat bottom portion and a seat back portion, thereby producing a seat in which said frame is at least partially embedded in a peripheral edge of said plastic part.

2. Method for manufacturing a seat such as claimed in claim 1, characterised in that said reinforcement frame is maintained in position in said mould by magnetic attraction.

3. Method for manufacturing a seat such as claimed in claim 2, characterised in that said magnetic attraction is produced by magnets associated with said mould.

4. Seat manufacturated according to the method defined in claim 1, including a one piece moulded plastic part defining a seat bottom portion and a seat back portion, said plastic part being formed by blow moulding and including a reinforcement frame with tubular peripheral structure received in formations shaped as reentrances or claws, characterized in that said reentrances or claws are moulded along a peripheral edge of said plastic part (1) and further in that said reentrances or claws surround approximately three quarters of the cross section of the tubular structure of said reinforcement frame (2).

5. Seat according to claim 4, characterised in that said peripheral edge has cut-away areas (5), leaving parts of said reinforcemente frame (2) exposed in said areas.

## Patentansprüche

1. Verfahren zum Herstellen eines Sitzes,
dadurch gekennzeichnet, daß ein Verstärkungsrahmen in einer Form angeordnet wird und dann in der Form ein einstückiges, einen Sitzflächenabschnitt und einen Rückenlehnenabschnitt des Sitzes bestimmendes Kunststoffteil blasgeformt wird, so daß damit ein Sitz erzeugt wird, bei dem der Rahmen zumindest teilweise in einen Umfangsrand des Kunststoffteils eingebettet ist.

2. Verfahren zum Herstellen eines Sitzes nach Anspruch 1,
dadurch gekennzeichnet, daß der Verstärkungsrahmen in der Form durch magnetische Anziehung in seiner Lage gehalten wird.

3. Verfahren zum Herstellen eines Sitzes nach Anspruch 2,
dadurch gekennzeichnet, daß die magnetische Anziehung von der Form zugeordneten Magneten erzeugt wird.

4. Sitz, der nach dem Verfahren nach Anspruch 1 hergestellt ist, mit einem einstückigen, einen Sitzflächenabschnitt und einen Rückenlehnenabschnitt des Sitzes festlegenden Kunststoffteil, das durch Blasformen gebildet ist und einen Verstärkungsrahmen mit einer Rohr-Umfangsstruktur aufweist, die von als Hinterschneidungen oder Klauen geformten Gebilden aufgenommen ist,
dadurch gekennzeichnet, daß die Hinterschneidungen oder Klauen entlang eines Umfangsrands des Kunststoffteils (1) ausgebildet sind und ferner dadurch, daß die Hinterschneidungen oder Klauen ungefähr drei Viertel des Querschnitts der Rohrstruktur des Verstärkungsrahmens (2) umgeben.

5. Sitz nach Anspruch 4,
dadurch gekennzeichnet, daß der Umfangsrand ausgesparte Bereiche (5) aufweist, so daß in diesen Bereichen Teile des Verstärkungsrahmens (2) freiliegen.

## Revendications

1. Procédé pour fabriquer un siège, caractérisé par le fait que l'on place un bâti de renforcement dans un moule et que l'on moule ensuite dans le moule, par soufflage, une pièce monobloc en matière plastique définissant une partie assise de siège et une partie dossier de siège, en produisant ainsi un siège dans lequel ledit bâti est noyé, au moins partiellement, dans un bord périphérique de ladite pièce en matière plastique.

2. Procédé pour fabriquer un siège tel que celui selon la revendication 1, caractérisé par le fait que ledit bâti de renforcement est maintenu en position dans ledit moule par attraction magnétique.

3. Procédé pour fabriquer un siège tel que celui selon la revendication 2, caractérisé par le fait que ladite attraction magnétique est produite par des aimants associés audit moule.

4. Siège fabriqué selon le procédé défini dans la revendication 1, comprenant une pièce en matière plastique moulée d'un seul bloc et définissant une partie assise de siège et une partie dossier de siège, ladite pièce en matière plastique étant moulée par soufflage et comprenant un bâti de renforcement comportant une structure périphérique tubulaire reçue dans des reliefs en forme d'évidements ou de griffes, caractérisé par le fait que lesdits évidements ou griffes sont moulés le long d'un bord périphérique de ladite pièce (1) en matière plastique et, en outre, par le fait que lesdits évidements ou griffes entourent approximativement les trois-quarts de la section droite de la structure tubulaire dudit bâti de renforcement (2).

5. Siège selon la revendication 4, caractérisé par le fait que ledit bord périphérique comporte des zones échancrées (5) laissant des parties dudit bâti de renforcement (2) découvertes dans lesdites zones.
